# EUROPÄISCHE PATENTSCHRIFT

(11) **EP 2 569 066 B1**
(45) Veröffentlichungstag und Bekanntmachung des Hinweises auf die Patenterteilung: **01.08.2018**
(21) Anmeldenummer: 11722361.0
(22) Anmeldetag: 12.05.2011
(51) Int. Cl.: B01D 1/06, B01D 1/14, B01D 1/22, B01D 3/04, B01D 53/14, B01D 53/18

(54) **VORRICHTUNG UND VERFAHREN ZUM ENTFERNEN FLÜCHTIGER SUBSTANZEN AUS EINER FLÜSSIGKEITSMISCHUNG**
DEVICE AND METHOD FOR REMOVING VOLATILE SUBSTANCES FROM A LIQUID MIXTURE
DISPOSITIF ET PROCÉDÉ POUR L'ÉLIMINATION DE SUBSTANCES VOLATILES D'UN MÉLANGE DE LIQUIDES

(30) Priorität: 12.05.2010 DE 202010006567 U
(43) Veröffentlichungstag der Anmeldung: 20.03.2013
(73) Patentinhaber: AWS Group AG, 74076 Heilbronn (DE)
(72) Erfinder: ENZENHOFER, Matthias, 75397 Simmozheim (DE)
(74) Vertreter: Maikowski & Ninnemann Patentanwälte Partnerschaft mbB
(86) Internationale Anmeldenummer: PCT/EP2011/057697
(87) Internationale Veröffentlichungsnummer: WO 2011/141548

(56) Entgegenhaltungen:
- EP-A1- 1 419 349
- US-A- 3 748 828
- US-A- 3 870 484
- US-A1- 2009 057 128

## Beschreibung

Die Erfindung betrifft eine Vorrichtung und ein Verfahren zum Entfernen flüchtiger Substanzen aus einer Flüssigkeitsmischung.

Das Entfernen flüchtiger Substanzen aus einer Flüssigkeitsmischung kann z. B. ein Verfahrensschritt in einem Verfahren zur Entfernung flüchtiger Substanzen aus Abluft sein, etwa Abluft aus einem Lackierbetrieb. In einem solchen Verfahren können zunächst in einem ersten Schritt die flüchtigen Substanzen mittels eines flüssigen Absorbens aus der Abluft entfernt werden. In einem zweiten Schritt können die entfernten Substanzen dann aus dem Absorbens zurückgewonnen werden.

Der erste Schritt kann z. B. durch ein Luftreinigungsgerät gemäß WO 2004/008034 ausgeführt werden. Ein solches Luftreinigungsgerät kann flüchtige Substanzen aus Luft durch eine Nassfiltervorrichtung entfernen, in der die Luft im Kreuzstrom an einer Vielzahl von Filterelementen vorbeigeführt wird, die gewirkte Kunststoffschläuche enthalten, die mit einem Film einer Absorbensflüssigkeit benetzt sind, die an den Schlauchoberflächen herabrinnt. Die flüchtigen Substanzen lösen sich im Absorbens und werden so aus der Luft entfernt. Um die Reinigungsfunktion des Gerätes zu erhalten, muss das Absorbens ausgetauscht werden, wenn es einen bestimmten Gehalt an flüchtigen Substanzen erreicht hat.

Der notwendige Austausch des Absorbens lässt sich vermeiden, indem die flüchtigen Substanzen in dem zweiten Schritt wieder aus dem Absorbens entfernt werden, so dass außerdem eine Rückgewinnung der flüchtigen Substanzen möglich wird.

Das Entfernen flüchtiger Substanzen aus einer Flüssigkeit (etwa dem Absorbens) kann konventionell z. B. durch Destillation durchgeführt werden. Dazu wird eine Flüssigkeitsmischung, die neben einer schwerflüchtigen Flüssigkeit mindestens eine flüchtige Substanz enthält, erhitzt, so dass überwiegend die flüchtige Substanz verdampft, während die schwerflüchtige Flüssigkeit zurückbleibt. Die verdampfte flüchtige Substanz kann aus der Dampfphase durch Kühlung als Flüssigkeit zurückgewonnen werden. Nachteile einer solchen Destillation sind der notwendige Zeit- und Energieaufwand. Desorbiersysteme zum Entfernen von flüchtigen Substanzen aus einer Flüssigkeitsmischung sind aus US 2009/005757128 bekannt. Eine erfindungsgemäße Desorbereinheit, mit der das erfindungsgemäße Verfahren ausgeführt werden kann, weist eine Flüssigkeitszufuhr und einen Flüssigkeitsablauf für eine Flüssigkeit, etwa ein Absorbens, sowie eine Gaszufuhr und einen Gasauslass auf. Das Absorbens wird über die Träger geleitet, so dass ein Absorbensfilm (der aus mehreren Einzelfilmen bestehen kann) einen Stoffaustausch mit dem vorbeigeführten Gas ausführen kann, bei dem durch geeignete Prozessbedingungen eine Desorption der im Absorbens gelösten flüchtigen Substanz(en) stattfindet, also eine Entfernung der flüchtigen Substanz aus dem Absorbens, wobei die flüchtige Substanz(en) in das Gas übergeht und mit ihr entfernt wird. Dabei können das Absorbens und/oder das Gas erwärmt werden, so dass der Stoffaustausch bei erhöhter Temperatur durchgeführt werden kann, um eine verbesserte Entfernung der flüchtigen Substanz(en) zu erreichen. Alternativ oder zusätzlich kann eine verbesserte Entfernung unter verringertem Druck erreicht werden. Bei Bedarf kann das Absorbens mehreren aufeinanderfolgenden Desorptionsschritten unterworfen werden, entweder durch die Verwendung mehrerer hintereinandergeschalteter Desorbereinheiten und/oder durch mehrfaches Hindurchleiten (Zirkulation) des Absorbens durch dieselbe Desorbereinheit. Das aus der Desorbereinheit austretende Gas wird zu einer Kondensationsvorrichtung geleitet. Dort wird die in dem Gas enthaltene flüchtige Substanz(en) durch zumindest teilweise Kondensation aus dem Gas zumindest teilweise entfernt, so dass Gas mit einer verringerten Konzentration der flüchtigen Substanz erhalten wird. Dieses Gas kann anschließend wieder in die Desorbereinheit geleitet werden, so dass ein geschlossener Luftkreislauf realisiert werden kann, ohne dass weitere Abluft erzeugt wird. Das Gas wird durch ein Gebläse im Kreislauf bewegt. Da die Temperaturdifferenz zwischen der Desorptionstemperatur und der Kondensationstemperatur niedriger als bei einer entsprechenden Destillation gehalten werden kann, ist ein reduzierter Energieverbrauch erreichbar.

Das aus der Desorbereinheit austretende Absorbens, aus dem die flüchtige Substanz(en) entfernt wurden, kann z. B. wieder einem Luftreinigungsgerät gemäß WO 2004/008034 zugeführt werden, so dass ebenfalls ein geschlossener Absorbenskreislauf realisiert werden kann. Dabei können alle Vorgänge kontinuierlich durchgeführt werden.

Erfindungsgemäß kann daher eine solche Kombination von Luftreinigungsgerät, Desorbereinheit und Kondensationsvorrichtung verwendet werden, um Abgas oder Abluft von flüchtigen Substanzen zu reinigen, wobei durch die geschlossenen Absorbens- und Gaskreisläufe (bezogen auf das Gas, das für die Desorbereinheit benötigt wird) die flüchtigen Substanzen wiedergewonnen werden können, ohne Abfälle zu produzieren.
Fig. 1 zeigt eine Funktionsskizze eines beispielhaften erfindungsgemäßen Desorptionsteils einer Lösemittelabscheidungs- und Rückgewinnungsanlage und
Fig. 2 zeigt den schematischen Aufbau einer beispielhaften Trägeranordnung mit Halterungen.

Nachfolgend wird die Erfindung genauer beschrieben.

Der Begriff "Entfernen" im Sinne der Erfindung bedeutet nicht notwendigerweise eine vollständige Entfernung der flüchtigen Substanz(en) aus dem Absorbens, sondern umfasst auch eine Verringerung des Gehalts der flüchtigen Substanz. Der Grad der Entfernung hängt von vielen Parametern ab und beträgt pro Desorbereinheit bevorzugt mindestens 50 %, stärker bevorzugt mindestens 70 %, besonders bevorzugt mindestens 90 %. Zur Steigerung des Gesamtgrades der Entfernung der flüchtigen Substanz(en) kann das Absorbens nacheinander durch mehrere Desorbereinheiten und/oder mehrfach hintereinander zirkulierend durch dieselbe Desorbereinheit geleitet werden.

Prozentangaben beziehen sich, soweit nicht anders definiert, auf Masse.

Ein Verfahren zum Entfernen mindestens einer flüchtigen Substanz aus einer Flüssigkeitsmischung, die neben der mindestens einen flüchtigen Substanz eine Flüssigkeit enthält, umfasst folgende Schritte:
a) Vorbeiführen von Gas an mit der Flüssigkeitsmischung benetzten Trägern, so dass mindestens ein Teil der mindestens einen flüchtigen Substanz aus der Flüssigkeitsmischung in das Gas übergeht,
b) Kondensation der mindestens einen flüssigen Substanz aus dem aus dem Schritt a) erhaltenen Gas durch Veränderung von Druck oder Temperatur des erhaltenen Gases, so dass mindestens ein Teil der mindestens einen flüchtigen Substanz aus dem Gas abgeschieden wird und die Konzentration der mindestens einen flüchtigen Substanz in dem Gas verringert wird und
c) Rückführen des aus dem Schritt b) erhaltenen Gases in den Schritt a).

Als Gas wird bevorzugt Luft verwendet. Alternativ können auch andere Gase, z.B. Stickstoff, verwendet werden.

Als Träger können z.B. Profile, Schläuche oder Rohre verwendet werden. Bevorzugt werden gewirkte Kunststoffschläuche verwendet, die bevorzugt aus Thermoplasten, z.B. Polyester, Polyamid, Polyethylen, Polypropylen, bestehen. Besonders geeignet ist Polyester. Die gewirkten Kunststoffschläuche können aus einem oder mehreren Filamenten gebildet sein, bevorzugt aus mehreren Filamenten. Bevorzugt werden die gewirkten Kunststoffschläuche durch eine thermische Behandlung, die etwa zu einem teilweisen Zusammenschmelzen oder Zusammensintern der Filamente, gegebenenfalls unter Schrumpfung, führt, mechanisch stabiler gemacht (die Herstellung solcher Schläuche ist z. B. in der DE 42 33 827 C2 beschrieben). Sie bleiben aber porös, so dass es im Betrieb der Vorrichtung zu einem vorteilhaften Flüssigkeitsaustausch zwischen der Innenseite und der Außenseite der gewirkten Kunststoffschläuche kommt, der sowohl die Fließgeschwindigkeit des Flüssigkeitsfilms verringert als auch eine gute Durchmischung der Flüssigkeit und eine Selbstreinigung des Trägers bewirkt. Statt ganzer Schläuche können auch z.B. längs halbierte Schläuche verwendet werden, die also einen halbkreisförmigen Querschnitt aufweisen. Die Träger weisen bevorzugt einen äußeren Durchmesser von höchstens 2 cm, stärker bevorzugt von höchstens 1 cm, besonders bevorzugt von höchstens 6 mm auf. Die Länge der Träger beträgt bevorzugt das mindestens 10-fache, stärker bevorzugt das mindestens 30-fache des Durchmessers. Bevorzugt wird eine Vielzahl von Trägern verwendet, die parallel zueinander mit gleichem Abstand (bevorzugt ist das Abstandsmaß das 1,5- bis 2,5-fache des äußeren Durchmessers der Träger) nebeneinander in einer geraden oder gekrümmten Reihe angeordnet sind, wobei bevorzugt mehrere, z.B. 10 bis 20, solcher Reihen hintereinander, bevorzugt jeweils um einen halben Abstand seitlich versetzt, also lückenüberdeckend, parallel zueinander angeordnet sind. Der Gasstrom wird bevorzugt senkrecht zu diesen Reihen, also im Kreuzstrom, so geführt, dass er den Flüssigkeitsfilm auf den Trägeroberflächen möglicht vollständig umstreicht, und kann durch ein Gebläse erzeugt und durch Luftleitelemente geführt und verteilt werden. Dabei sollte die Geschwindigkeit des Luftstroms nicht zu hoch gewählt werden, um eine Erzeugung und Mitnahme von Flüssigkeitströpfchen zu vermeiden.

Der Flüssigkeitsfilm auf der Trägeroberfläche ist bevorzugt ein Fallfilm, d. h. die Flüssigkeit bewegt sich aufgrund der Schwerkraft von oben nach unten. Deshalb sind die Träger mit ihrer Längserstreckung gegenüber der Waagerechten geneigt, bevorzugt zumindest im Wesentlichen senkrecht angeordnet.

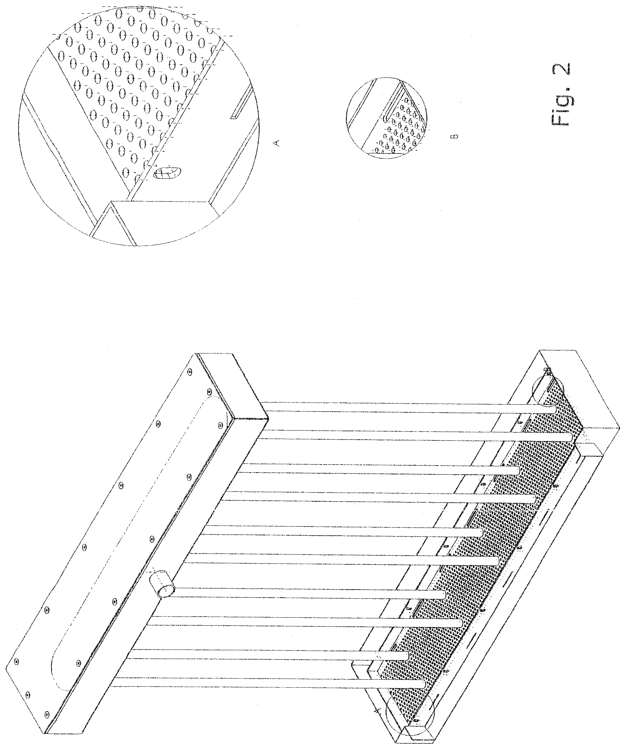

Fig. 2 zeigt beispielhaft (der Übersicht halber sind nur wenige Träger dargestellt), wie die einzelnen Träger bevorzugt durch oben und unten angeordnete Lochplatten jeweils an ihren oberen und unteren Enden gehalten, etwa durch Verklebung, Verschweißung oder Klemmung, und dadurch gespannt gehalten werden können. Die obere Lochplatte dient gleichzeitig zur Flüssigkeitszufuhr und -verteilung zu den einzelnen Trägern und weist nur Löcher zur Aufnahme der Träger auf. Der Ablauf der Flüssigkeit kann durch die untere Lochplatte erfolgen, die zusätzlich zu den Löchern zur Aufnahme der Träger weitere Löcher aufweisen kann, die den Ablauf der Flüssigkeit, die an der Außenseite der Träger hinabläuft, ermöglichen.

Als Absorbens kann jede Flüssigkeit dienen, die die jeweilige flüchtige Substanz(en) absorbieren und wieder abgeben (desorbieren) kann. Meist ist es vorteilhaft, wenn diese Flüssigkeit keinen zu hohen Dampfdruck aufweist, vor allem sollte der Dampfdruck im Allgemeinen deutlich unter dem Dampfdruck der flüchtigen Substanz liegen. Bevorzugt liegt deshalb der Siedepunkt des Absorbens bei mindestens 99 °C, stärker bevorzugt bei mindestens 150 °C, besonders bevorzugt bei mindestens 200 °C. Geeignete Absorbentien sind z.B. Wasser; Lösungen, bevorzugt wässrige Lösungen von Cyclodextrinen (z. B. α-, β-oder γ- Cyclodextrine) oder Cylodextrinderivaten (z. B. CAVASOL ® W6 HP der Firma Wacker Chemie AG); flüssige Paraffine; Mineralöle, z. B. Spindelöl (z. b. ISO-VG 8, 10 oder 46 der Firma LINOCEM GmbH & Co. KG); Ethylenglykol; Glycerin; Polyethylenglykole; Ethoxilate von Alkoholen, Aminen oder Amiden und Säuren (z. B. Lutensol ® der Firma BASF SE); und Polyethylenglykoldialkylether (z. B. Genosorb ® der Firma Clariant GmbH, insbesondere Genosorb ® 300, 1753 oder 1843).

Flüchtige Substanzen im Sinne der Erfindung umfassen alle Substanzen, die einen solchen Dampfdruck bei Raumtemperatur aufweisen, dass nachweisbare Mengen in die Gasphase (Luft) übergehen können, z. B. flüchtige organische Verbindungen, etwa Lösemittel wie aliphatische und aromatische Kohlenwasserstoffe, Alkohole, Aldehyde, Ketone, Ether und Ester. Abhängig von der jeweiligen flüchtigen Substanz kann ein geeignetes Absorbens ausgewählt werden, wobei besonders geeignete Absorbentien durch Vorauswahl nach herkömmlichen Kriterien (ähnliche chemische Substanzen, Dipolmomente, Polarisierbarkeiten) unter Berücksichtigung eines ausreichenden Unterschieds der Dampfdrücke und experimentelle Bestätigung der Eignung leicht gefunden werden können.

Die Kondensation der flüchtigen Substanz in der Kondensationsvorrichtung kann bevorzugt durch Kühlung etwa mittels Kühlwasser oder einer Kältemaschine erfolgen, so dass sich die flüchtige Substanz an einer Wärmetauscheroberfläche niederschlägt, von dieser abläuft und so entfernt werden kann. Alternativ oder auch zusätzlich zur Kühlung kann die Kondensation durch Druckerhöhung ausgeführt werden.

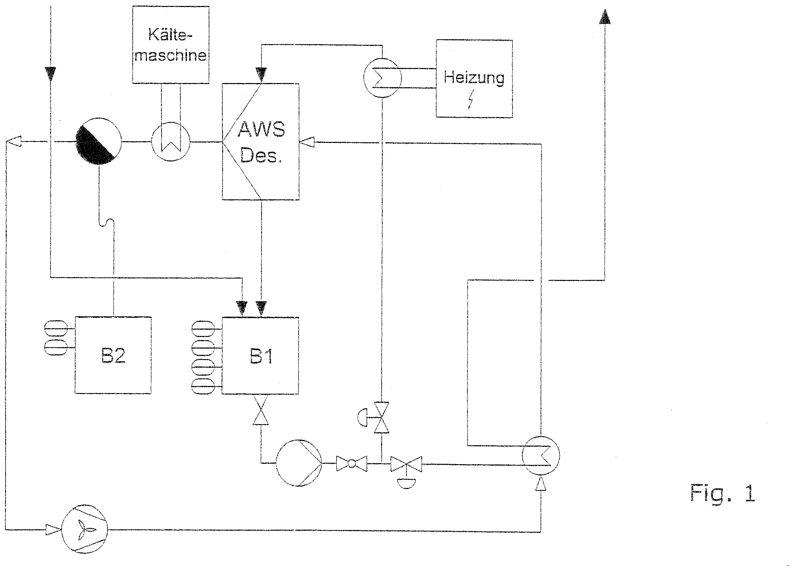

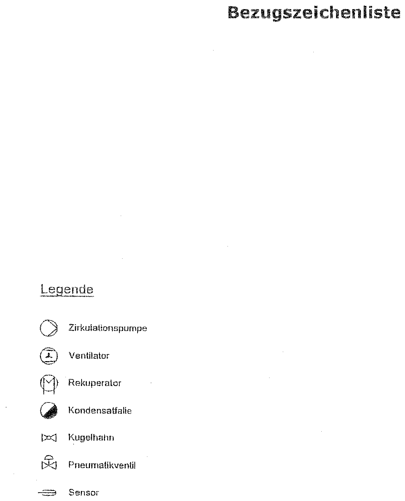

Nachfolgend wird unter Bezug auf Fig. 1 ein Beispiel einer erfindungsgemäßen Lösemittelrückgewinnungsanlage beschrieben. Einer erfindungsgemäßen Desorbereinheit (AWS Des.) mit einem aktiven Volumen von 0,36 m³ wird mit einer Temperatur von 70 °C als Flüssigkeitsmischung (Absorbens mit flüchtiger Substanz) Genosorb ® 1843 (Triethylenglykoldibutylether) mit 1,23 % Butylacetat aus einer Lösemittelabscheideanlage zugeführt. Der Desorbereinheit wird mittels eines Gebläses im Kreuzstrom unbeladene Luft zugeführt. Dadurch können etwa 8,1 g/s an Butylacetat aus der flüssigen Phase in die Gasphase überführt werden, wobei die Luft annähernd gesättigt wird. Das Absorbens wird danach erneut der Lösemittelabscheideanlage zugeführt. Die beladene, erwärmte Luft, die aus der Desorbereinheit austritt, wird einem Luftwärmetauscher als Kondensationseinheit mit einem aktiven Volumen von 0,18 m³ zugeführt, in dem bei einer Temperatur von 5 °C das Butylacetat aus der Gasphase kondensiert und abgeführt wird. Die aus der Kondensationseinheit austretende Luft weist nur noch eine Beladung von 0,51 % auf und wird erneut der Desorbereinheit zugeführt.

## Patentansprüche

1. Vorrichtung zum Entfernen mindestens einer flüchtigen Substanz aus einer Flüssigkeitsmischung, die neben der mindestens einen flüchtigen Substanz eine Flüssigkeit enthält, wobei die Vorrichtung umfasst:
a) eine Desorbereinheit mit
einer Trägeranordnung mit einer Zufuhr und einem Auslass für die Flüssigkeitsmischung, wobei die Trägeranordnung so gestaltet ist, dass die Flüssigkeitsmischung zwischen Zufuhr und Auslass über eine Anzahl von Trägern geleitet werden und auf der Oberfläche der Träger einen fließenden Flüssigkeitsfilm bilden kann, einer Gasführung mit einem Gaseinlass und einem Gasauslass, zwischen denen das Gas im Kreuzstrom an dem Flüssigkeitsfilm vorüberstreichen kann, so dass die mindestens eine flüchtige Substanz aus der Flüssigkeitsmischung in das Gas übertreten kann,
b) eine Kondensationseinheit mit einem Gaseingang, der mit dem Gasauslass der Desorbereinheit verbunden ist, einem Gasausgang, der mit dem Gaseinlass der Desorbereinheit verbunden ist, einem Wärmetauscher zum Kühlen hindurchgeleiteten Gases, das aus der Desorbereinheit kommt, mittels eines durchleitbaren Kühlmediums, so dass die mindestens eine flüchtige Substanz aus dem Gas kondensiert werden kann, und einem Ablauf, durch den die kondensierte mindestens eine flüchtige Substanz ablaufen kann, und
c) ein Gebläse, das in eine Gasverbindung zwischen der Desorbereinheit und der Kondensationseinheit eingebaut ist, so dass ein Gasstrom durch die Vorrichtung erzeugt werden kann,
wobei die Träger poröse gewirkte Kunststoffschläuche sind und die Flüssigkeit einen Siedepunkt von mindestens 150 °C aufweist.

2. Vorrichtung nach Anspruch 1, wobei die gewirkten Kunststoffschläuche einer Wärmebehandlung zur mechanischen Stabilisierung unterzogen wurden.

3. Vorrichtung nach Anspruch 1 oder 2, wobei das Gas Luft ist.

4. Verfahren zum Entfernen mindestens einer flüchtigen Substanz aus einer Flüssigkeitsmischung, die neben der mindestens einen flüchtigen Substanz eine Flüssigkeit enthält, mit den folgenden Schritten:
a) Vorbeiführen von Gas an mit der Flüssigkeitsmischung benetzten Trägern im Kreuzstrom, so dass mindestens ein Teil der mindestens einen flüchtigen Substanz aus der Flüssigkeitsmischung in das Gas übergeht,
b) Kondensation der mindestens einen flüssigen Substanz aus dem aus dem Schritt a) erhaltenen Gas durch Veränderung von Druck oder Temperatur des erhaltenen Gases, so dass mindestens ein Teil der mindestens einen flüchtigen Substanz aus dem Gas abgeschieden wird und die Konzentration der mindestens einen flüchtigen Substanz in dem Gas verringert wird und
c) Rückführen des aus dem Schritt b) erhaltenen Gases in den Schritt a), wobei die Träger poröse gewirkte Kunststoffschläuche sind und die Flüssigkeit einen Siedepunkt von mindestens 150 °C aufweist.

5. Verfahren nach Anspruch 4, wobei die Flüssigkeitsmischung und das Gas im Kreuzstrom geführt werden.

6. Verfahren nach Anspruch 4 oder 5, wobei das Gas Luft ist.

## Claims

1. Device for removing at least one volatile substance from a liquid mixture which, in addition to the at least one volatile substance, contains a liquid, wherein the device comprises:
a) a desorber unit having
a carrier arrangement with a feed and with an outlet for the liquid mixture, wherein the carrier arrangement is designed such that the liquid mixture can, between the feed and the outlet, be conducted over a number of carriers and form a flowing liquid film on the surface of the carriers,
a gas guide with a gas inlet and with a gas outlet, between which the gas is able to sweep past the liquid film in a cross-flow configuration such that the at least one volatile substance is able to pass from the liquid mixture into the gas,
b) a condensation unit with a gas input which is connected to the gas outlet of the desorber unit, with a gas output which is connected to the gas inlet of the desorber unit, with a heat exchanger for cooling gas conducted through, which gas comes from the desorber unit, by means of a cooling medium, which is able to be conducted through, such that the at least one volatile substance is able to be condensed out of the gas, and with an outflow through which the condensed at least one volatile substance is able to flow away, and
c) a fan which is installed in a gas connection between the desorber unit and the condensation unit such that a gas stream is able to be generated by the device,
wherein the carriers are porous, knitted plastic tubes, and the liquid has a boiling point of at least 150°C.

2. Device according to Claim 1, wherein the knitted plastic tubes have been subjected to heat treatment for the purpose of mechanical stabilization.

3. Device according to Claim 1 or 2, wherein the gas is air.

4. Method for removing at least one volatile substance from a liquid mixture which, in addition to the at least one volatile substance, contains a liquid, comprising the following steps:
a) guiding gas past carriers, wetted with the liquid mixture, in a cross-flow configuration such that at least part of the at least one volatile substance passes from the liquid mixture into the gas,
b) condensing the at least one liquid substance out of the gas obtained from step a) by changing the pressure or temperature of the obtained gas such that at least part of the at least one volatile substance is separated out of the gas and the concentration of the at least one volatile substance in the gas is reduced, and
c) returning the gas obtained from step b) to step a),
wherein the carriers are porous, knitted plastic tubes, and the liquid has a boiling point of at least 150°C.

5. Method according to Claim 4, wherein the liquid mixture and the gas are guided in a cross-flow configuration.

6. Method according to Claim 4 or 5, wherein the gas is air.

## Revendications

1. Dispositif pour l'élimination d'au moins une substance volatile hors d'un mélange de liquides, qui contient un liquide en plus de ladite au moins une substance volatile, dans lequel le dispositif comprend:
a) une unité de désorbeur avec
un agencement de supports avec une arrivée et une sortie pour le mélange de liquides, dans lequel l'agencement de supports est configuré de telle manière que le mélange de liquides soit conduit sur un nombre de supports entre l'arrivée et la sortie et qu'il puisse former un film de liquide s'écoulant sur la surface des supports,
un guidage de gaz avec une entrée de gaz et une sortie de gaz, entre lesquelles le gaz peut se répandre en écoulement croisé sur le film de liquide, de telle manière que ladite au moins une substance volatile puisse migrer du mélange de liquides dans le gaz,
b) une unité de condensation avec une entrée de gaz, qui est raccordée à la sortie de gaz de l'unité de désorbeur, une sortie de gaz, qui est raccordée à l'entrée de gaz de l'unité de désorbeur, un échangeur de chaleur pour le refroidissement du gaz en circulation qui vient de l'unité de désorbeur, au moyen d'un fluide de refroidissement, de telle manière que ladite au moins une substance volatile puisse être condensée à partir du gaz, et une évacuation, par laquelle ladite au moins une substance volatile condensée peut s'évacuer, et
c) une soufflante, qui est installée dans une conduite de gaz entre l'unité de désorbeur et l'unité de condensation, de telle manière qu'un courant de gaz puisse être produit à travers le dispositif,
dans lequel les supports sont des tuyaux flexibles en matière plastique maillés poreux et le liquide présente un point d'ébullition d'au moins 150°C.

2. Dispositif selon la revendication 1, dans lequel les tuyaux flexibles en matière plastique maillés ont été soumis à un traitement thermique en vue de leur stabilisation mécanique.

3. Dispositif selon la revendication 1 ou 2, dans lequel le gaz est l'air.

4. Procédé pour l'élimination d'au moins une substance volatile hors d'un mélange de liquides, qui contient un liquide en plus de ladite au moins une substance volatile, comprenant les étapes suivantes:
a) conduire un gaz en écoulement croisé sur des supports mouillés avec le mélange de liquides, de telle manière qu'au moins une partie de ladite au moins une substance volatile migre du mélange de liquides dans le gaz,
b) condenser ladite au moins une substance liquide à partir du gaz obtenu par l'étape a) par changement de la pression ou de la température du gaz obtenu, de telle manière qu'au moins une partie de ladite au moins une substance volatile soit précipitée à partir du gaz et que la concentration de ladite au moins une substance volatile dans le gaz soit réduite, et
c) renvoyer à l'étape a) le gaz obtenu à l'étape b),
dans lequel les supports sont des tuyaux flexibles en matière plastique maillés poreux et le liquide présente un point d'ébullition d'au moins 150°C.

5. Procédé selon la revendication 4, dans lequel le mélange de liquides et le gaz sont conduits en écoulement croisé.

6. Procédé selon la revendication 4 ou 5, dans lequel le gaz est l'air.
